# EUROPEAN PATENT SPECIFICATION

(11) **EP 3 514 205 B1**
(45) Date of publication and mention of the grant of the patent: **23.02.2022**
(21) Application number: 17850882.6
(22) Date of filing: 12.09.2017
(51) Int. Cl.: C08L 101/12, C08K 3/04, C08K 7/00, C08L 67/03

(54) **USE OF CARBON BLACK IN A LIQUID-CRYSTALLINE RESIN COMPOSITION**
VERWENDUNG VON RUß IN EINER ZUSAMMENSETZUNG EINES FLÜSSIGKRISTALLINEN HARZES
UTILISATION DE NOIR DE CARBONE DANS UNE COMPOSITION DE RESINE CRISTAL LIQUIDE

(30) Priority: 14.09.2016 JP 2016179653; 25.07.2017 JP 2017143459
(43) Date of publication of application: 24.07.2019
(73) Proprietor: Sumitomo Chemical Company, Limited, Tokyo 104-8260 (JP)
(72) Inventor: SUGIYAMA Takayuki, Tsukuba-shi Ibaraki 300-3294 (JP); YAMANISHI Keisuke, Tsukuba-shi Ibaraki 300-3294 (JP)
(74) Representative: Vossius & Partner Patentanwälte Rechtsanwälte mbB
(86) International application number: PCT/JP2017/032865
(87) International publication number: WO 2018/051980

(56) References cited:
- EP-A1- 3 275 351
- EP-A1- 3 494 846
- WO-A1-2009/072569
- WO-A1-2014/109199
- JP-A- 2009 179 763
- JP-A- 2011 111 623
- JP-A- 2011 157 422
- JP-A- 2012 087 171
- JP-A- 2013 122 062
- JP-A- 2013 175 383
- US-A1- 2014 171 576
- Cabot: "SPECIALTY CARBON BLACKS BLACK PEARLS 4350 SPECIALTY CARBON BLACK", , 31 October 2017 (2017-10-31), XP055752490, Retrieved from the Internet: URL:http://www.cabotcorp.com/~/media/produ ct-documents/datasheets/datasheet-black-pe arls-4350pdf.pdf [retrieved on 2020-11-19]
- Cabot: "SPECIALTY CARBON BLACKS BLACK PEARLS 4750 SPECIALTY CARBON BLACK", , 31 October 2017 (2017-10-31), XP055752512, Retrieved from the Internet: URL:http://www.cabotcorp.de/~/media/files/ product-datasheets/datasheet-black-pearls- 4750pdf.pdf [retrieved on 2020-11-19]

## Description

### [Technical Field]

The present invention relates to the use of a carbon black for suppressing a decrease in melt viscosity in a liquid crystalline resin composition.

Priority is claimed on Japanese Patent Application No. 2016-179653, filed September 14, 2016, and Japanese Patent Application No. 2017-143459, filed July 25, 2017.

In recent years, along with the reduction in size and thickness of electronic and electrical products, connectors used therefor are required to have a narrow pitch. For this reason, liquid crystalline resins excellent in melt fluidity, heat resistance and mechanical properties are preferably used as molding materials. In the liquid crystalline resins, since molecular chains tend to be oriented in the flow direction at the time of molding and anisotropy of the mold shrinkage rate and mechanical properties easily occurs in the flow direction and the direction perpendicular thereto, in order to reduce this, fibrous- and plate-like fillers are blended and used in many cases.

In addition, the liquid crystalline resins are often used under high temperature conditions because they are excellent in heat resistance. In this case, they may be colored in black and used for the purpose of preventing discoloration and for the purpose of imparting design properties. For example, Patent Document 1 discloses a composition obtained by blending a fibrous and/or plate-like filler and carbon black having an average particle diameter of 5 to 20 nm as a blackening agent in a liquid crystalline polyester. Patent Document 2 discloses a composition including a liquid crystalline polyester, a plate-like filler, and carbon black having a number average particle diameter of more than 20 nm and 45 nm or less.

Patent Documents 3 and 4 disclose a composition containing a liquid crystal polyester, talc or glass fiber, and carbon black.

Patent Document 5 discloses a composition comprising a liquid crystalline, a black pigment that includes a plurality of carbon black particles containing polynuclear aromatic hydrocarbons in an amount of about 1 part per million or less, and a filler.

### [Citation List]

### [Patent Documents]

[Patent Document 1] Japanese Unexamined Patent Application, First Publication No. 2001-279066
[Patent Document 2] Japanese Unexamined Patent Application, First Publication No. 2011-157422
[Patent Document 3] EP 3 275 351A1
[Patent Document 4] EP 3 494 846 A1
[Patent Document 5] US 2014/171576 A1

### [Summary of Invention]

### [Technical Problem]

In a conventional liquid crystalline resin composition containing carbon black, there was a problem of a decrease in melt viscosity.

The present invention has been made in view of the above circumstances, and an object thereof is to provide a liquid crystalline resin composition capable of suppressing a decrease in melt viscosity.

### [Solution to Problem]

The present invention is as defined in the appended claims.

### [Advantageous Effects of Invention]

According to the present invention, it is possible to provide a liquid crystalline resin composition capable of suppressing a decrease in melt viscosity.

### [Description of Embodiments]

### <Liquid crystalline resin composition>

The present invention relates to the use of a carbon black for suppressing a decrease in melt viscosity in a liquid crystalline resin composition containing a liquid crystalline resin, a filler, and the carbon black.

Hereinafter, each component constituting the present invention will be described.

### « Liquid crystalline resin »

The liquid crystalline resin is a resin exhibiting liquid crystallinity in a molten state, and it is a liquid crystalline polyester as defined in claim 1.

The liquid crystal polyester is a liquid crystal polyester exhibiting liquid crystallinity in a molten state, and is preferably one that melts at a temperature of 450°C or less (for example, 250°C or more and 450°C or less). It should be noted that the liquid crystalline polyester may be a liquid crystalline polyester amide, a liquid crystalline polyester ether, a liquid crystalline polyester carbonate, or a liquid crystalline polyester imide. The liquid crystalline polyester is preferably a wholly aromatic liquid crystal polyester using only an aromatic compound as a raw material monomer.

The liquid crystalline polyester is a liquid crystalline polyester obtained by polymerization (polycondensation) of an aromatic hydroxycarboxylic acid, an aromatic dicarboxylic acid, and at least one compound selected from the group consisting of an aromatic diol, an aromatic hydroxyamine and an aromatic diamine.

Here, the aromatic hydroxycarboxylic acid, the aromatic dicarboxylic acid, the aromatic diol, the aromatic hydroxyamine and the aromatic diamine may be each independently replaced partially or entirely with a polymerizable derivative thereof.

Examples of the polymerizable derivative of a compound having a carboxyl group, such as an aromatic hydroxycarboxylic acid and an aromatic dicarboxylic acid, include a derivative (also referred to as an ester) obtained by converting a carboxyl group into an alkoxycarbonyl group or an aryloxycarbonyl group, a derivative (also referred to as an acid halide) obtained by converting a carboxyl group into a haloformyl group, and a derivative (also referred to as an acid anhydride) obtained by converting a carboxyl group into an acyloxycarbonyl group. Examples of the polymerizable derivative of a compound having a hydroxyl group, such as an aromatic hydroxycarboxylic acid, an aromatic diol and an aromatic hydroxyamine, include a derivative (also referred to as an acylated product) obtained by acylating a hydroxyl group and converting it to an acyloxyl group. Examples of the polymerizable derivative of a compound having an amino group, such as an aromatic hydroxyamine and an aromatic diamine, include a derivative (also referred to as an acylated product) obtained by acylating an amino group and converting it to an acylamino group.

The liquid crystalline polyester has at least one repeating unit represented by the following formula (1) (hereinafter may be referred to as "repeating unit (1)" in some cases), a repeating unit represented by the following formula (2) (hereinafter may be referred to as "repeating unit (2)" in some cases) and a repeating unit represented by the following formula (3) (hereinafter may be referred to as "repeating unit (3)" in some cases).

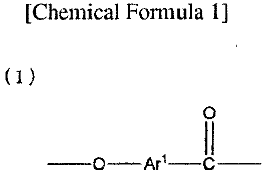

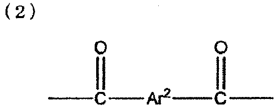

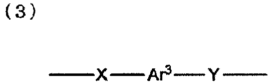

(Ar¹ represents a phenylene group, a naphthylene group or a biphenylylene group; each of Ar² and Ar³ independently represents a phenylene group, a naphthylene group, a biphenylylene group or a group represented by the following formula (4), each of X and Y independently represents an oxygen atom or an imino group (-NH-); and each of hydrogen atoms in the group represented by Ar¹, Ar² or Ar³ may be independently substituted with a halogen atom, an alkyl group or an aryl group.)

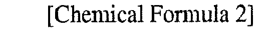

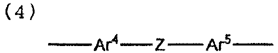

(Ar⁴ and Ar⁵ each independently represent a phenylene group or a naphthylene group; and Z represents an oxygen atom, a sulfur atom, a carbonyl group, a sulfonyl group or an alkylidene group.)

Examples of the halogen atom include a fluorine atom, a chlorine atom, a bromine atom and an iodine atom. The alkyl group is preferably an alkyl group having 1 to 10 carbon atoms, and examples thereof include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group and an n-decyl group. The aryl group is preferably an aryl group having 6 to 20 carbon atoms, and examples thereof include a phenyl group, an o-tolyl group, an m-tolyl group, a p-tolyl group, a 1-naphthyl group and a 2-naphthyl group. When the aforementioned hydrogen atom is substituted with any of these groups, the number thereof is usually 2 or less and preferably 1 or less, independently for each of the groups represented by Ar¹, Ar² or Ar³.

The alkylidene group is preferably an alkylidene group having 1 to 10 carbon atoms, and examples thereof include a methylene group, an ethylidene group, an isopropylidene group, an n-butylidene group and a 2-ethylhexylidene group.

The repeating unit (1) is a repeating unit derived from a predetermined aromatic hydroxycarboxylic acid. As the repeating unit (1), a repeating unit in which Ar¹ is a p-phenylene group (for example, a repeating unit derived from p-hydroxybenzoic acid) and a repeating unit in which Ar¹ is a 2,6-naphthylene group (for example, a repeating unit derived from 6-hydroxy-2-naphthoic acid) are preferred.

The repeating unit (2) is a repeating unit derived from a predetermined aromatic dicarboxylic acid. As the repeating unit (2), a repeating unit in which Ar² is a p-phenylene group (for example, a repeating unit derived from terephthalic acid), a repeating unit in which Ar² is an m-phenylene group (for example, a repeating unit derived from isophthalic acid), a repeating unit in which Ar² is a 2,6-naphthylene group (for example, a repeating unit derived from 2,6-naphthalene dicarboxylic acid), and a repeating unit in which Ar² is a diphenyl ether-4,4'-diyl group (for example, a repeating unit derived from diphenyl ether-4,4'-dicarboxylic acid) are preferable.

The repeating unit (3) is a repeating unit derived from a predetermined aromatic diol, aromatic hydroxylamine or aromatic diamine. As the repeating unit (3), a repeating unit in which Ar³ is a p-phenylene group (for example, a repeating unit derived from hydroquinone, p-aminophenol or p-phenylenediamine) and a repeating unit in which Ar³ is a 4,4'-biphenylylene group (for example, a repeating unit derived from 4,4'-dihydroxybiphenyl, 4-amino-4'-hydroxybiphenyl or 4,4'-diaminobiphenyl) are preferable.

Here, the expression "derived" means that the chemical structure is changed from that of the raw monomer because of polymerization.

The content of the repeating unit (1) is preferably 30 mol% or more, more preferably 30 mol% or more and 80 mol% or less, particularly preferably 40 mol% or more and 70 mol% or less and extremely preferably 45 mol% or more and 65 mol% or less, with respect to the total amount of all the repeating units constituting the liquid crystalline polyester (that is, a value obtained by dividing the mass of each repeating unit constituting the liquid crystalline polyester by the formula weight of each repeating unit, determining the equivalents (mol) of the amounts of substances of each repeating unit and summing them up). The content of the repeating unit (2) is preferably 35 mol% or less, more preferably 10 mol% or more and 35 mol% or less, particularly preferably 15 mol% or more and 30 mol% or less and extremely preferably 17.5 mol% or more and 27.5 mol% or less, with respect to the total amount of all the repeating units constituting the liquid crystalline polyester. The content of the repeating unit (3) is preferably 35 mol% or less, more preferably 10 mol% or more and 35 mol% or less, particularly preferably 15 mol% or more and 30 mol% or less and extremely preferably 17.5 mol% or more and 27.5 mol% or less, with respect to the total amount of all the repeating units constituting the liquid crystalline polyester. The higher the content of the repeating unit (1), the easier the melt fluidity, heat resistance and strength / rigidity of the liquid crystalline polyester are improved, but if it is too high, the melt temperature and melt viscosity of the liquid crystalline polyester tends to be high, and the temperature required for molding tends to be high.

That is, when the content of the repeating unit (1) is within the above range, since the melt fluidity, heat resistance and strength / rigidity are easily improved and the melt temperature and melt viscosity of the liquid crystalline polyester can be prevented from becoming too high, the temperature required for molding does not become too high.

A ratio of the content of the repeating unit (2) to the content of the repeating unit (3) represented by the formula: [content of the repeating unit (2)] / [content of the repeating unit (3)] (mol / mol) is usually from 0.9 / 1 to 1 / 0.9, preferably from 0.95 / 1 to 1 / 0.95, and more preferably from 0.98 / 1 to 1 / 0.98.

It should be noted that the liquid crystalline polyester may each independently have two or more repeating units (1) to (3). Further, the liquid crystalline polyester may have a repeating unit other than the repeating units (1) to (3), but the content thereof is preferably 10 mol% or less, and more preferably 5 mol% or less, with respect to the total amount of all the repeating units constituting the liquid crystalline polyester.

Since the melt viscosity of the liquid crystalline polyester is likely to be lowered (the melt viscosity does not become too high), the liquid crystalline polyester preferably includes a repeating unit in which X and Y each represent an oxygen atom, that is, includes a repeating unit derived from a predetermined aromatic diol, as the repeating unit (3), and more preferably includes only a repeating unit in which X and Y each represent an oxygen atom as the repeating units (3).

The liquid crystalline polyester is preferably produced by melt polymerization of a raw material monomer corresponding to the repeating unit constituting the liquid crystalline polyester and solid phase polymerization of the obtained polymer (hereinafter sometimes referred to as "prepolymer"). As a result, a high molecular weight liquid crystalline polyester having high heat resistance and high strength / rigidity can be produced with favorable operability. The melt polymerization may be carried out in the presence of a catalyst. Examples of the catalyst include metal compounds such as magnesium acetate, stannous acetate, tetrabutyl titanate, lead acetate, sodium acetate, potassium acetate and antimony trioxide, and nitrogen-containing heterocyclic compounds such as 4-(dimethylamino) pyridine and 1-methylimidazole, and nitrogen-containing heterocyclic compounds are preferred.

The flow starting temperature of the liquid crystalline polyester is preferably 270°C or more, more preferably 270°C or more and 400°C or less, and particularly preferably 280°C or more and 380°C or less. The higher the flow starting temperature, the easier the heat resistance and the strength / rigidity are improved. However, if it is too high, the melt temperature and the melt viscosity tend to be high and the temperature required for molding tends to be high. That is, when the flow starting temperature of the liquid crystalline polyester is within the above range, the heat resistance and strength / rigidity are easily improved, and the melt temperature and melt viscosity do not become too high, and the temperature required for molding also does not become too high.

It should be noted that the term "flow starting temperature" is also referred to as flow temperature or fluidity temperature and serves as an indicator of the molecular weight of a liquid crystalline polyester, which is a temperature where a viscosity of 4,800 Pa·s (48,000 poise) is exhibited when a liquid crystalline polyester is melted and extruded from a nozzle having an inner diameter of 1 mm and a length of 10 mm, while raising the temperature at a rate of 4°C/min under a load of 9.8 MPa (100 kg / cm²) using a capillary rheometer (see "Liquid Crystalline Polymer - Synthesis, Molding, and Application -" edited by Naoyuki Koide, p. 95, CMC Publishing Co., Ltd., published on June 5, 1987).

The content of the liquid crystalline polyester is preferably from 50 to 85% by mass, and more preferably from 60 to 75% by mass, with respect to the total mass of the liquid crystalline resin composition.

### << Filler >>

The filler may be an inorganic filler or an organic filler. Further, the shape thereof may be fibrous, particulate or plate-like.

Examples of the fibrous inorganic filler include glass fibers; carbon fibers such as polyacrylonitrile (PAN)-based carbon fibers and pitch-based carbon fibers; ceramic fibers such as silica fibers, alumina fibers and silica alumina fibers; and metal fibers such as stainless steel fibers. In addition, whiskers such as potassium titanate whisker, barium titanate whisker, wollastonite whisker, aluminum borate whisker, silicon nitride whisker and silicon carbide whisker can also be mentioned.

Examples of particulate inorganic fillers include silica, alumina, glass beads, glass balloons, boron nitride, silicon carbide and calcium carbonate.

Examples of plate-like inorganic fillers include talc, mica, graphite, wollastonite, glass flakes, barium sulfate and calcium carbonate. The mica may be muscovite, phlogopite, fluorophlogopite or tetrasilicic mica.

Examples of the fibrous organic filler include a polyester fiber and an aramid fiber.

In the present invention, the filler is preferably at least one member selected from the group consisting of a glass fiber and a plate-like inorganic filler from the viewpoint of further suppressing a decrease in melt viscosity of the liquid crystalline resin composition. That is, it is more preferable to contain either one or both of the glass fiber and the plate-like inorganic filler. Among the plate-like inorganic fillers, talc or mica is preferable, and mica is particularly preferable.

As another aspect, the filler according to the present invention preferably includes mica, and more preferably is composed of mica alone.

In the present invention, the content of the filler is 5 parts by mass or more and 100 parts by mass or less, preferably 10 parts by mass or more and 90 parts by mass or less, more preferably 15 parts by mass or more and 80 parts by mass or less, still more preferably 20 parts by mass or more and 70 parts by mass or less, and particularly preferably 33 parts by mass or more and 67 parts by mass or less, with respect to 100 parts by mass of the liquid crystalline resin.

As another aspect, the content of the filler is preferably from 25 to 40% by mass with respect to the total mass of the liquid crystalline resin composition.

When the content of the filler is within the above specified range, a decrease in the melt viscosity of the liquid crystalline resin composition can be suppressed.

In the present specification, the melt viscosity can be measured by the method described in Examples described later.

### << Carbon black >>

"Carbon black" is fine carbon particles having various functional groups on its surface. It is known that the carbon black contains a polycyclic aromatic hydrocarbon (hereinafter sometimes referred to as "PAH").

The carbon black is a particulate component mainly composed of carbon, and examples thereof include furnace black, channel black, acetylene black, and lamp black.

The total content of the eight substances contained in the carbon black according to the present invention and listed in the following Table 2 is less than 2.5 ppm, preferably 2.2 ppm or less, more preferably 2.0 ppm or less, particularly preferably 1.8 ppm or less, and may even be 0 ppm, with respect to the total mass of the carbon black.

In the present specification, the term "ppm" is equivalent to parts per million mass, that is, the number of milligrams contained per 1 kg (mg / kg), and can also be expressed as "mass ppm".

Among the eight substances contained in the carbon black according to the present invention and listed in the following Table 2, the total content of benzo (a) pyrene and benzo (e) pyrene is preferably less than 1.5 ppm, more preferably 1.0 ppm or less, and particularly preferably 0.5 ppm or less with respect to the total mass of the carbon black.

**[Table 2]**

| Substance name | CAS number |
|---|---|
| Benzo(a)anthracene | 56-55-3 |
| Benzo(a)pyrene | 50-32-8 |
| Benzo(b)fluoranthene | 205-99-2 |
| Benzo(k)fluoranthene | 207-08-9 |
| Chrvsene | 218-01-9 |
| Dibenzo(a,h)anthracene | 53-70-3 |
| Benzo(e)pyrene | 192-97-2 |
| Benzo(j)fluoranthene | 205-82-3 |

In the present invention, the carbon black preferably has a number average particle size of more than 20 nm and 45 nm or less. It is more preferably 22 nm or more, and is preferably 40 nm or less. That is, the number average particle size is preferably 22 nm or more and 40 nm or less.

The number average particle size of carbon black is measured by observing carbon black with an electron microscope. More specifically, the particle diameters of 1,000 or more carbon black particles are randomly measured from an image enlarged by 50,000 to 200,000 times, and the average value thereof can be taken as the number average particle size.

In the present invention, the amount of dibutyl phthalate absorbed by the carbon black is preferably equal to or less than 150 cm³ / 100 g. The amount of dibutyl phthalate absorbed by the carbon black can be measured according to JIS K 6221.

As another aspect, the amount of dibutyl phthalate absorbed by the carbon black is preferably 30 cm³ / 100 g or more and 150 cm³ / 100 g or less.

In the present invention, the specific surface area of the carbon black is preferably 200 m²/g or less, and more preferably 150 m²/g or less. The specific surface area of carbon black is measured by the S-BET formula from the amount of adsorbed nitrogen according to JIS K 6217.

As another aspect, the specific surface area of the carbon black is preferably 20 m²/g or more and 200 m²/g or less, and more preferably 50 m²/g or more and 150 m²/g or less.

In the present invention, the volatile component of the carbon black is preferably 2% by weight or less, and more preferably 1.5% by weight or less, with respect to the total mass of the carbon black. As another aspect, the volatile component of the carbon black is preferably 0.1% by weight or more and 2% by weight or less, and more preferably 0.2% by weight or more and 1.5% by weight or less with respect to the total mass of the carbon black.

As the volatile component of carbon black, undecomposed products derived from raw materials, surface functional groups of carbon black, and the like can be mentioned. The volatile component of carbon black can be measured as the ratio of weight loss when the carbon black is heated at 950°C for 7 minutes.

Further, in the present invention, the carbon black is preferably neutral or basic.

As a method of obtaining the carbon black according to the present invention, a commercially available carbon black having low contents of the eight substances shown in the above Table 2 may be purchased, or one obtained by removing the eight substances shown in the above Table 2 from carbon black using an organic solvent such as toluene and thereby adjusting the total amount of the eight substances shown in the above Table 2 to 2.5 ppm or less may be used.

In addition, as a method of controlling the total content of the eight substances shown in the above Table 2 to be less than 2.5 ppm, it may be controlled by subjecting the carbon black to a heating treatment and vaporizing and decomposing a part of PAH contained in the carbon black.

The content of the eight substances shown in the above Table 2 in carbon black may be measured by gas chromatography-mass spectrometry (hereinafter may be referred to as GC-MS in some cases).

Further, in the present invention, since carbon black having a total content of specific polycyclic aromatic hydrocarbons of less than 2.5 ppm is used, a liquid crystalline resin composition having a low PAH content can be provided.

In the present invention, the content of carbon black is 0.1 parts by mass or more and 5 parts by mass or less, preferably 0.2 parts by mass or more and 4 parts by mass or less, more preferably 0.3 parts by mass or more and 3 parts by mass or less, still more preferably 0.4 parts by mass or more and 2 parts by mass or less, particularly preferably 0.4 parts by mass or more and less than 2 parts by mass, and extremely preferably 0.4 parts by mass or more and 1.7 parts by mass or less, with respect to 100 parts by mass of the liquid crystalline resin.

By setting the content of the carbon black having the total content of the eight substances listed in Table 2 of less than 2.5 ppm within the above specified range, it is possible to suppress a decrease in the melt viscosity of the liquid crystalline resin composition.

The liquid crystalline resin composition is preferably prepared by melt-kneading the liquid crystalline resin, the filler, the carbon black and other components used as required by an extruder and extruding the resultant into a pellet form. As the extruder, one having a cylinder, at least one screw disposed in the cylinder, and at least one supply port provided in the cylinder is preferable, and one further having at least one vent portion provided in the cylinder is more preferable.

Examples of the other components used as required include, for example, an antioxidant, a heat stabilizer, an ultraviolet absorber, an antistatic agent, a surfactant and a flame retardant. The content of the other components is usually preferably 0 to 5 parts by mass with respect to 100 parts by mass of the liquid crystalline polyester.

In addition, the liquid crystalline resin composition can also be adjusted by a method of blending a liquid crystalline resin, a filler, carbon black and other components used as required to prepare a master batch pellet, and dry blending the resultant with a natural pellet at the time of molding process to obtain a product with a predetermined content.

Examples of products and parts which are molded articles of the liquid crystalline resin composition include bobbins such as optical pickup bobbins and transformer bobbins; relay parts such as relay cases, relay bases, relay sprues and relay armatures; connectors such as RIMM, DDR, CPU sockets, S/O, DIMM, Board to Board connectors, FPC connectors and card connectors; reflectors such as lamp reflectors and LED reflectors; holders such as lamp holders and heater holders; diaphragms such as speaker diaphragms; separation claws such as separation claws for photocopiers and separation claws for printers; camera module parts; switch parts; motor parts; sensor parts; hard disk drive parts; cooking utensils such as ovenware; vehicle parts; aircraft parts; and sealing members such as semiconductor element sealing members and coil sealing members.

As a molding method of molded articles of the liquid crystalline resin composition, a melt molding method is preferable, and examples thereof include an injection molding method, an extrusion molding method such as a T-die method and an inflation method, a compression molding method, a blow molding method, a vacuum molding method and a press molding method. Among them, the injection molding method is preferable.

Another aspect of the present invention is the use of a carbon black for suppressing a decrease in melt viscosity in
a liquid crystalline resin composition containing a liquid crystalline resin, a filler, and the carbon black.
wherein the aforementioned liquid crystalline resin includes the aforementioned repeating unit (1), the aforementioned repeating unit (2), and the aforementioned repeating unit (3), and preferably includes a repeating unit derived from p-hydroxybenzoic acid, a repeating unit derived from 4,4'-dihydroxybiphenyl, a repeating unit derived from terephthalic acid, and a repeating unit derived from isophthalic acid;
the aforementioned filler is at least one selected from the group consisting of a glass fiber, talc and mica, preferably at least one selected from the group consisting of a glass fiber and mica, and more preferably mica;
the content of the aforementioned liquid crystalline resin is from 50 to 85% by mass, and preferably from 60 to 75% by mass, with respect to the total mass of the aforementioned liquid crystalline resin composition;
the content of the aforementioned filler is 5 parts by mass or more and 100 parts by mass or less, preferably 10 parts by mass or more and 90 parts by mass or less, more preferably 15 parts by mass or more and 80 parts by mass or less, still more preferably 20 parts by mass or more and 70 parts by mass or less, and particularly preferably 33 parts by mass or more and 67 parts by mass or less, with respect to 100 parts by mass of the aforementioned liquid crystalline resin;
the content of the aforementioned carbon black is 0.1 parts by mass or more and 5 parts by mass or less, preferably 0.2 parts by mass or more and 4 parts by mass or less, more preferably 0.3 parts by mass or more and 3 parts by mass or less, still more preferably 0.4 parts by mass or more and 2 parts by mass or less, particularly preferably 0.4 parts by mass or more and less than 2 parts by mass, and most preferably 0.4 parts by mass or more and 1.7 parts by mass or less, with respect to 100 parts by mass of the aforementioned liquid crystalline resin; and
the total content of the eight substances contained in the aforementioned carbon black and described in the above Table 1 is less than 2.5 ppm, preferably 2.2 ppm or less, more preferably 2.0 ppm or less, still more preferably 1.8 ppm or less, and particularly preferably less than 1.6 ppm.

### [Examples]

Hereinafter, the present invention will be described in more detail by way of examples, but the present invention is not limited by the examples.

### [Measurement of flow starting temperature]

The flow starting temperature of a liquid crystalline polyester was measured using a flow characteristic evaluation apparatus "Flowtester Model CFT-500" manufactured by Shimadzu Corporation. About 2 g of a powdered sample was filled in a capillary rheometer equipped with a die having an inner diameter of 1 mm and a length of 10 mm, and the temperature at which the melt viscosity showed 4,800 Pa·s (48,000 poise) when the liquid crystalline polyester was extruded from the nozzle at a rate of temperature increase of 4°C/min under a load of 9.8 MPa (100 kgf/cm²) was taken as the flow starting temperature.

### [Melt viscosity]

With respect to the obtained pellets, the melt viscosity was measured under the conditions of a nozzle pore diameter of 0.5 mm and a shear rate of 1,000 s⁻¹, 5,000 s⁻¹ or 10,000 s⁻¹ at the measurement temperatures respectively shown in Tables 4 and 5, using a flow characteristic tester (Capilograph ID) manufactured by Toyo Machine Mfg. Co., Ltd.

### [Measurement of 8 substances in carbon black]

In the present example, the following carbon black products were used. The contents of 8 substances shown in the following Table 3 contained in each of the following carbon black products were measured. "<0.2" in Table 3 indicates that it is below the detection limit.
- Carbon Black #45LB, manufactured by Mitsubishi Chemical Corporation
- Carbon Black #45B, manufactured by Mitsubishi Chemical Corporation

0.5 g of each of the carbon black #45LB and the carbon black #45B was added to 20 ml of toluene for dioxin analysis (manufactured by Kanto Chemical Co., Inc.), and then ultrasonic extraction was carried out for 1 hour. After extraction, centrifugal sedimentation treatment was performed, and GC-MS measurement was carried out by an internal standard method using a supernatant.
Apparatus: Agilent 7890 (manufactured by Agilent Technologies, Inc.)
Column: Agilent Select PAH
Length: 15 m, inner diameter: 0.15 mm, film thickness: 0.10 µm (manufactured by Agilent Technologies Inc.)
Detector: Agilent 5975C (manufactured by Agilent Technologies, Inc.)
Temperature increase program: 70°C (held for 0.4 minutes) → (temperature increase: 70°C/min) → 180°C
   → (temperature increase: 7°C/min) → 230°C (held for 7 minutes)
   → (temperature increase: 50°C/min) → 280°C (held for 7 minutes)
   → (temperature increase: 30°C/min) → 350°C (held for 4 minutes)
Injection volume: 1 µL
Inlet temperature: 300°C
Interface temperature: 320°C
Ion source temperature: 300°C
Quadrupole temperature: 180°C
Internal standard: PAH SURROGATE (manufactured by Cambridge Isotope Laboratories, Inc.)

**[Table 3]**

| Substance name | CAS number | Carbon Black | |
|---|---|---|---|
| | | #45LB | #45B |
| | | PAH content (ppm) | |
| Benzo(a)anthracene | 56-55-3 | <0.2 | <0.2 |
| Benzo(a)pvrene | 50-32-8 | <0.2 | 0.9 |
| Benzo(b)fluoranthene | 205-99-2 | <0.2 | 0.2 |
| Benzo(k)fluoranthene | 207-08-9 | <0.2 | <0.2 |
| Chrvsene | 218-01-9 | <0.2 | <0.2 |
| Dibenzo(a,h)anthracene | 53-70-3 | <0.2 | <0.2 |
| Benzo(e)pyrene | 192-97-2 | <0.2 | 1.6 |
| Benzo(i)fluoranthene | 205-82-3 | <0.2 | <0.2 |
| PAH total content | | <1.6 | 2.7 or more and less than 3.7 |

### <Production of liquid crystalline polyester 1 (LCP 1)>

828.7 g (6.0 mol) of p-hydroxybenzoic acid, 558.6 g (3.0 mol) of 4,4'-dihydroxybiphenyl, 473.5 g (2.85 mol) of terephthalic acid, 24.9 g (0.15 mol) of isophthalic acid and 1,408.8 g (13.8 mol) of acetic anhydride were charged to a reactor equipped with a stirrer, a torque meter, a nitrogen gas inlet tube, a thermometer and a reflux condenser, and the inside of the reactor was thoroughly replaced with nitrogen gas. Thereafter, the temperature was raised from room temperature to 150°C over a period of 30 minutes under a nitrogen gas stream, and the resultant was refluxed for 3 hours while maintaining the same temperature.

Subsequently, the temperature was raised from 150°C to 320°C over a period of 4 hours while distilling off acetic acid produced as a byproduct and unreacted acetic anhydride, and at a time point where an increase in torque was observed, the reaction was terminated to obtain a prepolymer.

It should be noted that in the present specification, the phrase "room temperature" means 20 to 30°C.

The prepolymer obtained in this manner was cooled to room temperature and pulverized with a coarse grinder, and the powder of this prepolymer was subjected to solid phase polymerization by being heated from room temperature to 250°C over 1 hour, under a nitrogen atmosphere, heated from 250°C to 317°C over 6 hours, and held at 317°C for 9 hours.

The flow starting temperature of the obtained liquid crystalline polyester 1 was 385°C.

### <Production of liquid crystalline polyester 2 (LCP 2)>

994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1,347.6 g (13.2 mol) of acetic anhydride were charged and 0.2 g of 1-methylimidazole was added to a reactor equipped with a stirrer, a torque meter, a nitrogen gas inlet tube, a thermometer and a reflux condenser, and the inside of the reactor was thoroughly replaced with nitrogen gas. Thereafter, the temperature was raised from room temperature to 150°C over a period of 30 minutes under a nitrogen gas stream, and the resultant was refluxed for 1 hour while maintaining the same temperature.

Subsequently, 0.9 g of 1-methylimidazole was added, and the temperature was raised from 150°C to 320°C over a period of 2 hours and 50 minutes while distilling off acetic acid produced as a byproduct and unreacted acetic anhydride, and at a time point where an increase in torque was observed, the reaction was terminated to obtain a prepolymer.

The prepolymer obtained in this manner was cooled to room temperature and pulverized with a coarse grinder, and the powder of this prepolymer was subjected to solid phase polymerization by being heated from room temperature to 250°C over 1 hour, under a nitrogen atmosphere, heated from 250°C to 285°C over 5 hours, and held at 285°C for 3 hours.

The flow starting temperature of the obtained liquid crystalline polyester 2 was 327°C.

### <Production of liquid crystalline polyester 3 (LCP 3)>

994.5 g (7.2 mol) of p-hydroxybenzoic acid, 446.9 g (2.4 mol) of 4,4'-dihydroxybiphenyl, 239.2 g (1.44 mol) of terephthalic acid, 159.5 g (0.96 mol) of isophthalic acid, and 1,347.6 g (13.2 mol) of acetic anhydride were charged and 0.2 g of 1-methylimidazole was added to a reactor equipped with a stirrer, a torque meter, a nitrogen gas inlet tube, a thermometer and a reflux condenser, and the inside of the reactor was thoroughly replaced with nitrogen gas.

Thereafter, the temperature was raised from room temperature to 150°C over a period of 30 minutes under a nitrogen gas stream, and the resultant was refluxed for 1 hour while maintaining the same temperature.

Subsequently, 0.9 g of 1-methylimidazole was added, and the temperature was raised from 150°C to 320°C over a period of 2 hours and 50 minutes while distilling off acetic acid produced as a byproduct and unreacted acetic anhydride, and at a time point where an increase in torque was observed, the reaction was terminated to obtain a prepolymer.

The prepolymer obtained in this manner was cooled to room temperature and pulverized with a coarse grinder, and the powder of this prepolymer was subjected to solid phase polymerization by being heated from room temperature to 220°C over 1 hour, under a nitrogen atmosphere, heated from 220°C to 240°C over 0.5 hours, and held at 240°C for 10 hours. The flow starting temperature of the obtained liquid crystalline polyester 3 was 291°C.

### <Example 1>

A glass fiber (CS3J-256S, manufactured by Nitto Boseki Co., Ltd.) and carbon black (Carbon Black #45LB, manufactured by Mitsubishi Chemical Corporation) were blended with the above liquid crystalline polyester 1 (LCP 1) at a blending ratio shown in the following Table 4, and then a pelletized liquid crystalline polyester resin composition was obtained using a twin screw extruder ("TEM-41SS" manufactured by Toshiba Machine Co., Ltd.).

### <Example 2>

Mica (AB-25S, manufactured by Yamaguchi Mica Co., Ltd.) as a plate-like filler and carbon black (Carbon Black #45LB, manufactured by Mitsubishi Chemical Corporation) were blended with the above liquid crystalline polyester 2 (LCP 2) and liquid crystalline polyester 3 (LCP 3) at a blending ratio shown in the following Table 5, and then a pelletized liquid crystalline polyester resin composition was obtained using a twin screw extruder ("TEM-41SS" manufactured by Toshiba Machine Co., Ltd.).

### <Comparative Example 1>

A glass fiber (CS3J-256S, manufactured by Nitto Boseki Co., Ltd.) and carbon black (Carbon Black #45B, manufactured by Mitsubishi Chemical Corporation) were blended with the above liquid crystalline polyester 1 (LCP 1) at a blending ratio shown in the following Table 4, and then a pelletized liquid crystalline polyester resin composition was obtained using a twin screw extruder ("TEM-41 SS" manufactured by Toshiba Machine Co., Ltd.).

### <Comparative Example 2>

Mica (AB-25S, manufactured by Yamaguchi Mica Co., Ltd.) as a plate-like filler and carbon black (Carbon Black #45B, manufactured by Mitsubishi Chemical Corporation) were blended with the above liquid crystalline polyester 2 (LCP 2) and liquid crystalline polyester 3 (LCP 3) at a blending ratio shown in the following Table 5, and then a pelletized liquid crystalline polyester resin composition was obtained using a twin screw extruder ("TEM-41SS" manufactured by Toshiba Machine Co., Ltd.).

**[Table 4]**

| | LCP1 | Glass fiber | Carbon black | | Melt viscosity (measurement temperature: 400°C) | | |
|---|---|---|---|---|---|---|---|
| | | | | | Shear rate | | |
| | | | | | 1,000 S⁻¹ | 5,000 S⁻¹ | 10,000 S⁻¹ |
| | Parts by mass | Parts by mass | Product name | Parts by mass | Pa·s | | |
| Ex. 1 | 100 | 67 | #45LB | 1.67 | 168 | 39 | 21 |
| Comp. Ex. 1 | 100 | 67 | #45B | 1.67 | 124 | 28 | 16 |

**[Table 5]**

| | LCP2 | LCP3 | Plate-like fiber | Carbon black | | Melt viscosity (measurement temperature: 330°C) | | |
|---|---|---|---|---|---|---|---|---|
| | | | | | | Shear rate | | |
| | | | | | | 1,000 S⁻¹ | 5,000 S⁻¹ | 10,000 S⁻¹ |
| | Parts by mass | Parts by mass | Parts by mass | Product name | Parts by mass | Pa·s | | |
| Ex. 2 | 55 | 45 | 33 | #45LB | 1.33 | 55 | 20 | 14 |
| Comp. Ex. 2 | 55 | 45 | 33 | #45B | 1.33 | 38 | 15 | 11 |

As shown in Table 4, the liquid crystalline polyester resin composition of Example 1 to which the present invention was applied had a higher melt viscosity than that of Comparative Example 1 to which the present invention was not applied, and the viscosity reduction due to the addition of carbon black was suppressed, which was a satisfactory result.

As shown in Table 5, the liquid crystalline polyester resin composition of Example 2 to which the present invention was applied had a higher melt viscosity than that of Comparative Example 2 to which the present invention was not applied, and the viscosity reduction due to the addition of carbon black was suppressed, which was a satisfactory result.

As can be seen from the above evaluation results, according to the present example, it was possible to obtain a liquid crystalline resin composition in which the content of PAH was small and the decrease in viscosity due to the addition of carbon black was suppressed.

### [Industrial Applicability]

According to the present invention, since it is possible to provide a liquid crystalline resin composition capable of suppressing a decrease in melt viscosity, it is extremely useful industrially.

## Claims

1. Use of a carbon black for suppressing a decrease in melt viscosity in a liquid crystalline resin composition comprising a liquid crystalline resin, a filler, and said carbon black,
wherein said liquid crystalline resin is a liquid crystalline polyester having a repeating unit (1), a repeating unit (2) and a repeating unit (3): 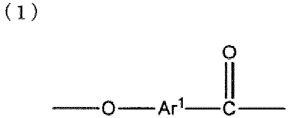 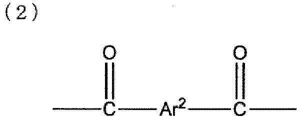 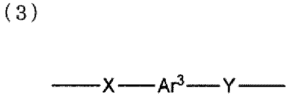 in which Ar¹ represents a phenylene group, a naphthylene group or a biphenylylene group; each of Ar² and Ar³ independently represents a phenylene group, a naphthylene group, a biphenylylene group or a group represented by the following formula (4), each of X and Y independently represents an oxygen atom or an imino group -NH-; and each of hydrogen atoms in the group represented by Ar¹, Ar² or Ar³ may be independently substituted with a halogen atom, an alkyl group or an aryl group; 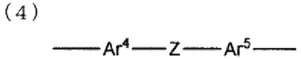 in which Ar⁴ and Ar⁵ each independently represent a phenylene group or a naphthylene group; and Z represents an oxygen atom, a sulfur atom, a carbonyl group, a sulfonyl group or an alkylidene group,
a content of said filler is 5 parts by mass or more and 100 parts by mass or less with respect to 100 parts by mass of said liquid crystalline resin,
a content of said carbon black is 0.1 parts by mass or more and 5 parts by mass or less with respect to 100 parts by mass of said liquid crystalline resin, and
a total content of 8 substances described in the following Table 1 and contained in said carbon black is less than 2.5 ppm, as determined in accordance with the description.
**[Table 1]**
| Substance name | CAS number |
|---|---|
| Benzo(a)anthracene | 56-55-3 |
| Benzo(a)pyrene | 50-32-8 |
| B enzo(b)fluoranthene | 205-99-2 |
| B enzo(k)fluoranthene | 207-08-9 |
| Chrvsene | 218-01-9 |
| Dibenzo(a,h)anthracene | 53-70-3 |
| Benzo(e)pyrene | 192-97-2 |
| Benzo(j)fluoranthene | 205-82-3 |

2. The use of a carbon black according to claim 1, wherein a content of said carbon black is 0.2 parts by mass or more and 4 parts by mass or less with respect to 100 parts by mass of the liquid crystalline resin.

3. The use of a carbon black according to claim 1, wherein a content of said carbon black is 0.4 parts by mass or more and 2 parts by mass or less with respect to 100 parts by mass of the liquid crystalline resin.

4. The use of a carbon black according to any one of claims 1 to 3, wherein said carbon black has a number average particle size of more than 20 nm and 45 nm or less, as determined in accordance to the description.

5. The use of a carbon black according to any one of claims 1 to 3, wherein said carbon black has a number average particle size of 22 nm or more and 40 nm or less, as determined in accordance to the description.

6. The use of a carbon black according to any one of claims 1 to 5, wherein the specific surface area of said carbon black is 20 m²/g or more and 200 m²/g or less, measured by S-BET formula from the amount of adsorbed nitrogen according to JIS K 6217.

7. The use of a carbon black according to any one of claims 1 to 5, wherein the specific surface area of said carbon black is 50 m²/g or more and 150 m²/g or less, measured by S-BET formula from the amount of adsorbed nitrogen according to JIS K 6217.

8. The use of a carbon black according to any one of claims 1 to 7, wherein said filler is at least one member selected from the group consisting of a glass fiber and a plate-like inorganic filler.

9. The use of a carbon black according to claim 8, wherein said plate-like inorganic filler is talc or mica.

10. The use of a carbon black according to claim 8, wherein said plate-like inorganic filler is mica.

## Patentansprüche

1. Verwendung eines Rußes zur Unterdrückung einer Abnahme der Schmelzviskosität bei einer Zusammensetzung eines flüssigkristallinen Harzes, umfassend ein flüssigkristallines Harz, einen Füllstoff und den Ruß,
wobei das flüssigkristalline Harz ein flüssigkristalliner Polyester mit einer wiederkehrenden Einheit (1), einer wiederkehrenden Einheit (2) und einer wiederkehrenden Einheit (3) ist: 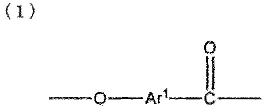 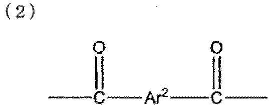 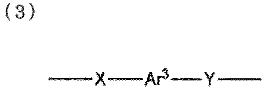 wobei Ar¹ eine Phenylengruppe, eine Naphthylengruppe oder eine Biphenylylengruppe darstellt; jedes von Ar² und Ar³ unabhängig eine Phenylengruppe, eine Naphthylengruppe, eine Biphenylylengruppe oder eine Gruppe, dargestellt durch die folgende Formel (4), darstellt, jedes von X und Y unabhängig ein Sauerstoffatom oder eine Iminogruppe -NH- darstellt; und jedes der Wasserstoffatome in der durch Ar¹, Ar² oder Ar³ dargestellten Gruppe unabhängig mit einem Halogenatom, einer Alkylgruppe oder einer Arylgruppe substituiert sein kann; 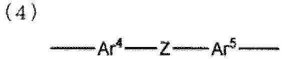 wobei Ar⁴ und Ar⁵ jeweils unabhängig eine Phenylengruppe oder eine Naphthylengruppe darstellen; und Z ein Sauerstoffatom, ein Schwefelatom, eine Carbonylgruppe, eine Sulfonylgruppe oder eine Alkylidengruppe darstellt;
ein Gehalt des Füllstoffes 5 Massenteile oder mehr und 100 Massenteile oder weniger, bezogen auf 100 Massenteile des flüssigkristallinen Harzes, beträgt,
ein Gehalt des Rußes 0,1 Massenteile oder mehr und 5 Massenteile oder weniger, bezogen auf 100 Massenteile des flüssigkristallinen Harzes, beträgt und
ein Gesamtgehalt von 8 Substanzen, die in der folgenden Tabelle 1 beschrieben und in dem Ruß enthalten sind, weniger als 2,5 ppm beträgt, wie gemäß der Beschreibung bestimmt.
**[Tabelle 1]**
| Bezeichnung der Substanz | CAS-Nummer |
|---|---|
| Benzo(a)anthracen | 56-55-3 |
| Benzo(a)pyren | 50-32-8 |
| Benzo(b)fluoranthen | 205-99-2 |
| Benzo(k)fluoranthen | 207-08-9 |
| Chrysen | 218-01-9 |
| Dibenzo(a,h)anthracen | 53-70-3 |
| Benzo(e)pyren | 192-97-2 |
| Benzo(j)fluoranthen | 205-82-3 |

2. Die Verwendung eines Rußes nach Anspruch 1, wobei ein Gehalt des Rußes 0,2 Massenteile oder mehr und 4 Massenteile oder weniger, bezogen auf 100 Massenteile des flüssigkristallinen Harzes, beträgt.

3. Die Verwendung eines Rußes nach Anspruch 1, wobei ein Gehalt des Rußes 0,4 Massenteile oder mehr und 2 Massenteile oder weniger, bezogen auf 100 Massenteile des flüssigkristallinen Harzes, beträgt.

4. Die Verwendung eines Rußes nach einem der Ansprüche 1 bis 3, wobei der Ruß ein Zahlenmittel der Teilchengröße von mehr als 20 nm und 45 nm oder weniger aufweist, wie gemäß der Beschreibung bestimmt.

5. Die Verwendung eines Rußes nach einem der Ansprüche 1 bis 3, wobei der Ruß ein Zahlenmittel der Teilchengröße von 22 nm oder mehr und 40 nm oder weniger aufweist, wie gemäß der Beschreibung bestimmt.

6. Die Verwendung eines Rußes nach einem der Ansprüche 1 bis 5, wobei die spezifische Oberfläche des Rußes 20 m²/g oder mehr und 200 m²/g oder weniger beträgt, gemessen mit Hilfe der S-BET-Formel anhand der Menge an adsorbiertem Stickstoff gemäß JIS K 6217.

7. Die Verwendung eines Rußes nach einem der Ansprüche 1 bis 5, wobei die spezifische Oberfläche des Rußes 50 m²/g oder mehr und 150 m²/g oder weniger beträgt, gemessen mit Hilfe der S-BET-Formel anhand der Menge an adsorbiertem Stickstoff gemäß JIS K 6217.

8. Die Verwendung eines Rußes nach einem der Ansprüche 1 bis 7, wobei der Füllstoff mindestens ein Mitglied, ausgewählt aus der Gruppe bestehend aus einer Glasfaser und einem plättchenförmigen anorganischen Füllstoff, ist.

9. Die Verwendung eines Rußes nach Anspruch 8, wobei der plättchenförmige anorganische Füllstoff Talkum oder Glimmer ist.

10. Die Verwendung eines Rußes nach Anspruch 8, wobei der plättchenförmige anorganische Füllstoff Glimmer ist.

## Revendications

1. Utilisation d'un noir de carbone pour supprimer une réduction de la viscosité à l'état fondu dans une composition de résine cristal liquide comprenant une résine cristal liquide, une charge, et ledit noir de carbone,
dans laquelle ladite résine cristal liquide est un polyester cristal liquide ayant un motif répétitif (1), un motif répétitif (2) et un motif répétitif (3) : 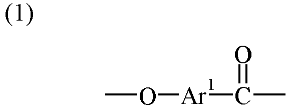 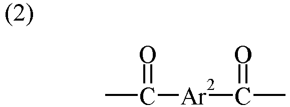 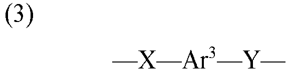 dans laquelle Ar¹ représente un groupe phénylène, un groupe naphtylène ou un groupe biphénylylène ; chacun de Ar² et Ar³ représente indépendamment un groupe phénylène, un groupe naphtylène, un groupe biphénylylène ou un groupe représenté par la formule (4) qui suit, chacun de X et Y représente indépendamment un atome d'oxygène ou un groupe imino -NH- ; et chacun des atomes d'hydrogène dans le groupe représenté par Ar¹, Ar² ou Ar³ peut être indépendamment remplacé par un atome d'halogène, un groupe alkyle ou un groupe aryle ; 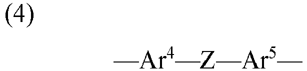 dans laquelle chacun de Ar⁴ et Ar⁵ représente indépendamment un groupe phénylène ou un groupe naphtylène ; et Z représente un atome d'oxygène, un atome de soufre, un groupe carbonyle, un groupe sulfonyle ou un groupe alkylidène,
la teneur en ladite charge est de 5 parties en masse ou plus et de 100 parties en masse ou moins pour 100 parties en masse de ladite résine cristal liquide,
la teneur en ledit noir de carbone est de 0,1 partie en masse ou plus et de 5 parties en masse ou moins pour 100 parties en masse de ladite résine cristal liquide, et
la teneur totale en 8 substances décrites dans le Tableau 1 qui suit et contenues dans ledit noir de carbone est inférieure à 2,5 ppm, comme déterminé conformément à la description.
**[Tableau 1]**
| Nom de la substance | Numéro CAS |
|---|---|
| Benzo(a)anthracène | 56-55-3 |
| Benzo(a)pyrène | 50-32-8 |
| Benzo(b)fluoranthène | 205-99-2 |
| Benzo(k)fluoranthène | 207-08-9 |
| Chrysène | 218-01-9 |
| Dibenzo(a,h)anthracène | 53-70-3 |
| Benzo(e)pyrène | 192-97-2 |
| Benzo(j)fluoranthène | 205-82-3 |

2. Utilisation d'un noir de carbone selon la revendication 1, dans laquelle la teneur en ledit noir de carbone est de 0,2 partie en masse ou plus et de 4 parties en masse ou moins pour 100 parties en masse de ladite résine cristal liquide.

3. Utilisation d'un noir de carbone selon la revendication 1, dans laquelle la teneur en ledit noir de carbone est de 0,4 partie en masse ou plus et de 2 parties en masse ou moins pour 100 parties en masse de ladite résine cristal liquide.

4. Utilisation d'un noir de carbone selon l'une quelconque des revendications 1 à 3, dans laquelle ledit noir de carbone a une granulométrie moyenne en nombre supérieure à 20 nm et de 45 nm ou moins, telle que déterminée conformément à la description.

5. Utilisation d'un noir de carbone selon l'une quelconque des revendications 1 à 3, dans laquelle ledit noir de carbone a une granulométrie moyenne en nombre de 22 nm ou plus et de 40 nm ou moins, telle que déterminée conformément à la description.

6. Utilisation d'un noir de carbone selon l'une quelconque des revendications 1 à 5, dans laquelle la surface spécifique dudit noir de carbone est de 20 m²/g ou plus et de 200 m²/g ou moins, mesurée par la formule S-BET à partir de la quantité d'azote adsorbé conformément à la norme JIS K 6217.

7. Utilisation d'un noir de carbone selon l'une quelconque des revendications 1 à 5, dans laquelle la surface spécifique dudit noir de carbone est de 50 m²/g ou plus et de 150 m²/g ou moins, mesurée par la formule S-BET à partir de la quantité d'azote adsorbé conformément à la norme JIS K 6217.

8. Utilisation d'un noir de carbone selon l'une quelconque des revendications 1 à 7, dans laquelle ladite charge est au moins un membre choisi dans l'ensemble constitué par les fibres de verre et une charge inorganique lamellaire.

9. Utilisation d'un noir de carbone selon la revendication 8, dans laquelle ladite charge inorganique lamellaire est le talc ou le mica.

10. Utilisation d'un noir de carbone selon la revendication 8, dans laquelle ladite charge inorganique lamellaire est le mica.
